# EUROPEAN PATENT SPECIFICATION

(11) **EP 0 760 340 B1**
(45) Date of publication and mention of the grant of the patent: **03.04.2002**
(21) Application number: 96306367.2
(22) Date of filing: 03.09.1996
(51) Int. Cl.: B65D 33/25, A44B 19/16

(54) **A snap fastener and a bag for packaging with a snap fastener**
Druckknopf und diesen aufweisender Verpackungssack
Bouton-pression et sac d'emballage équipé de celui-ci

(30) Priority: 04.09.1995 JP 22641695
(43) Date of publication of application: 05.03.1997
(73) Proprietor: IDEMITSU PETROCHEMICAL CO., LTD., Tokyo 108-0014 (JP)
(72) Inventor: Tanaka, Kenichi, c/o Idemitsu Petrochem. Co., Ltd., Himeji-shi, Hyogo-ken (JP); Takashige, Masao, c/o Idemitsu Petrochem. Co, Ltd., Himeji-shi, Hyogo-ken (JP)
(74) Representative: Rackham, Stephen Neil

(56) References cited:
- EP-A- 0 371 402
- EP-A- 0 484 599
- EP-A- 0 517 971
- EP-A- 0 566 363
- WO-A-90/04544

## Description

This invention relates to a snap fastener and a bag for packaging with a snap fastener, which are used as packaging for food or medical equipment.

A bag (a snap bag) capable of opening has been used in many areas, such as food, medical equipment, variety goods and so on, by providing a band-like snap fastener (a fixation), composed of a male strip member and a female strip member, at the opening portion of the bag. Various methods for producing the bag for packaging with the snap fastener are proposed.

For example, (1) a method in which the bag body, the male strip member and the female strip member of the snap fastener, are produced by extrusion molding one piece, (2) a method in which the snap fastener is molded to be extruded directly onto the bag body, and (3) a method in which the snap fastener, having a band-like base portion (a tape portion) is made separately from the bag body and is subsequently fused onto the bag body film.

of the above, method (3) is most commonly used owing to considerations of production costs, management and so on.

As material for the snap fastener, generally, a low-density polyethylene (LDPE) and polypropylene (PP) are used, and a sealant of the inner-most layer of the bag body fused with the snap fastener has the same type of resin. For instance, in the case where the sealant of the bag body consists of LDPE, the material of the snap fastener uses the same LDPE.

The bag for packaging with the snap fastener is repeatedly opened after the bag is opened once, therefore, it is desirable that the opening produced between the snap fastener and the top seal of the bag is in a straight-line to easily reopen. For allowing the bag to have a linear cut operation, conventionally, a structure, in which a uniaxially oriented film is bonded onto the bag body along an opening area between the snap portion and the top seal of the bag, has been proposed. However, this has the disadvantage that it is costly owing to the number of process steps required in production.

In the case where the base portion has aluminum foil as a middle layer, when the snap portion corresponding to the position of the end of the bag is crushed with pressure and heat, the vicinity of the snapping portion is sometimes not sufficiently softened whilst the vicinity of the band-like base portion is softened. During a pressing operation to fuse the layers together the non-softened area damages the aluminum foil of the bag body, with the result that a moisture-proof effect of the aluminum foil is ruined.

Furthermore, conventional snap fasteners consisting of LDPE have a propensity to retain shrinking stress in the MD direction (the moving direction of the snap fastener). As a result, when the snap portion is fused onto the bag body, the aforementioned remaining stress is loosened by heat, so that creases are produced on the fused portion of the band-like base portion and the bag body, with the result that the quality level of production is reduced.

According to a first aspect of the present invention a snap fastener, having a male strip member and a female strip member which are mutually engaged and respectively have band-like base portions and snapping portions having a snapping function, is characterized by the band-like base portion including a first layer fused onto a bag body; a second layer laminated onto the first layer; and a third layer laminated onto the second layer, with the first layer consisting of a resin film heat sealable to the inner-most layer of the bag body, the second layer consisting of a biaxially oriented film, the third layer consisting of a resin film fused to the snapping portion, and the snapping portion consisting of synthetic resin having a MI of 1-20 g/10min.

It is preferable that the first layer is formed from the same type of resin film as resin used for a sealant (e.g., L-LDPE, PP), but it may be a resin film having a fine adhesive such as ethylene-methyl acrylate random copolymer (EMA) for a sealant of polybutylene terephthalate (PBT) type.

It is preferable that the resin film of the first layer has a higher melting point than a film of the second layer. In the case in which the melting point of the resin film of the first layer is higher than the film of the second layer, the film of the second layer melts when the snap fastener is fused to the bag body by heating, with the result that creasing stops appearing.

As a material of the biaxially oriented film of the second layer, an arbitrary material can be chosen, it is, however, preferable to choose, from the view of transparency, nylon (Ny, e.g. 15µm thick), polypropylene (PP, e.g. 20µm thick) and polyethylene terephthalate (PET, e.g. 12µm thick), with nylon being the most preferable considering the linear cut operation.

The biaxially oriented film has distinctions which are the film's linear cut operation resulting from the orientation of molecules inside the film, the higher stretched elastic force resulting from the molecules being extended, and smaller shrinkage by heating resulting from the molecules being secured at all times.

The biaxially oriented film is arranged for each band-like base portion of the male strip member and the female strip member as described above, in addition, the biaxially oriented film generally used in the base film of the bag body, in total, four layers of the biaxially oriented film are cut simultaneously while opening the bag, therefore, the desirable linear cut operation can be obtained by aligning the four pieces of biaxially oriented film.

Further, when the snap fastener corresponding to a position at the end of the bag is forcibly pressed, the biaxially oriented film of the second layer absorbs force generated to the bag body, therefore, aluminum foil optionally present in the bag body structure is prevented from being damaged.

The resin film of the third layer is preferably a film of the same resin type as the resin of the snapping portion (e.g. PP). If it is possible to fuse them together, a different resin film from the resin of the snapping portion may be used. It is preferable that the resin film of the third layer has approximately the same or a higher melting point than the resin film of the first layer. In the case in which the melting point of the resin film of the third layer is lower than the resin film of the first layer, when the snap fastener is fused to the bag body by heating, the bag might be produced in a faulty way by fusing the third layer to a space-making plate arranged between the male strip member and the female strip member in order to prevent from fusing with each other.

If the MI of the snapping portion is less than 1 g/10min, a melt fracture will ensue, and if it is more than 20 g/10min, it will exhibit inferior moldability (the performance of retaining the shape of the mold). More preferably, the MI is 2.8 g/10min.

Any synthetic material can be used for the snapping portion, for example PE, PP, EVA, or EMMA (ethylene-methyl methacrylate random copolymer).

Preferably the snap fastener is characterized by the fact that the biaxially oriented film of the second layer is a biaxially oriented nylon film having more than one layer.

By choosing the biaxially oriented nylon film a desirable transparent film as well as desirable "linear cut operation" can be simultaneously obtained.

Preferably, at least one layer of the biaxially oriented nylon film consists of 40-85% by weight of nylon 6 (Ny 6) and 15-60% by weight of meta-xylylene adipamide (MXD 6), in which both stretch ratios of the MD direction (the machine direction of the film) and the TD direction (the transverse direction of the film) are more than 2.8.

With less than 15% by weight of MXD 6, the desirable linear cut operation cannot be obtained, and in the case of MXD in excess of 60% by weight the impact resistance is reduced and therefore the preferred forcibly pressing operation cannot be acheived.

When the second layer is composed of a multi-layered biaxially oriented nylon film, the desirable linear cut operation of the whole second layer is achieved if the film comprises at least one of the aforementioned Ny 6, MXD 6 copolymer layers.

According to a second aspect of the present invention a bag for packaging with the snap fastener is characterized by the fact that the snap fastener according to the first aspect of the invention is fused through the first layer onto the bag body.

The snap fastener of the present invention is fused through the band-like base portion having the aforementioned three-layer structure onto the bag body, therefore, creases caused by shrinking upon heating are not produced.

The bag for packaging with the snap fastener (herein after designated as "the bag") preferably comprises a first fusing portion formed adjacent to the snapping portion between the snapping portion and the bag body; and a second fusing portion which is also formed between the snapping portion and the bag body, so as to define a non-fusing portion, as a tearing guide, between the first fusing portion and the second fusing portion.

When the bag is opened, the band-like base portion and the base film of the bag body are torn along the aforementioned non-fusing portion. Therefore, in addition to the desirable linear cut operation of the aforementioned four pieces of the biaxially oriented film, the aforementioned non-fusing portion acts as a guide when the bag is torn by hands.

The space between both fusing portions must be sufficient for guiding the tear along the non-fusing portion.

In the accompanying drawings:-
Fig. 1 is a sectional view of a snap fastener according to the preferred embodiment of the present invention;
Fig. 2 is a sectional view showing a production process of a bag for packaging with the snap fastener of the preferred embodiment;
Fig. 3 is a plane view of the bag for packaging with the snap fastener of the preferred embodiment; and
Fig. 4 is a fragmentary sectional view of the bag for packaging with the snap fastener of the preferred embodiment.

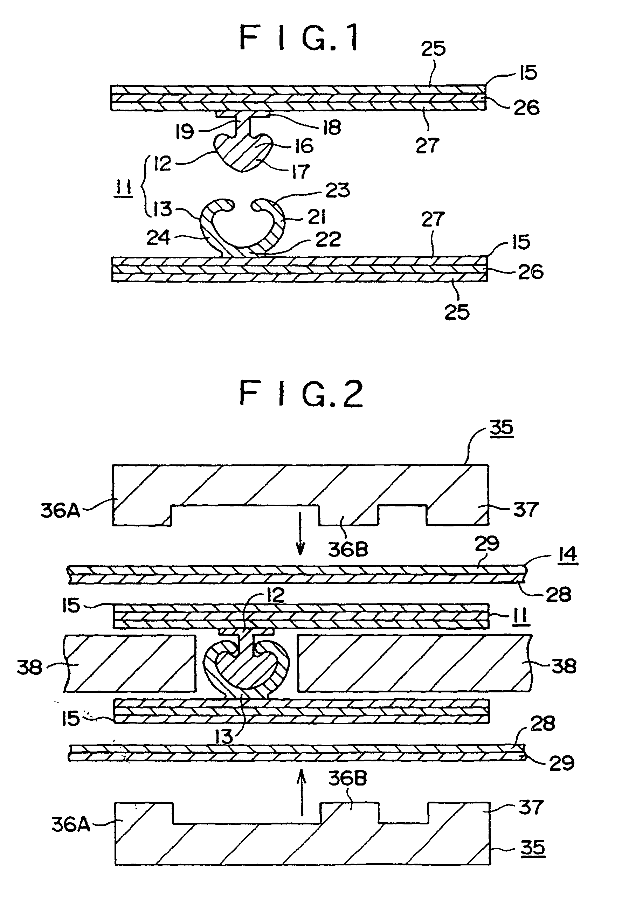

The preferred embodiment according to the present invention will be explained in detail below with reference to Fig. 1 to Fig. 4.

As shown in Figs. 1, 2 and 4 a snap fastener 11 of the preferred embodiment is composed of a band-like male strip member 12 and a band-like female strip member 13 engaging the male strip member 12.

The male strip member 12 includes a band-like base portion 15 to be fused onto a bag body 14, and a snapping portion 16 having a snapping function.

The snapping portion 16 is composed of a sectional heart-shaped male portion head portion 17, an end portion 18 fused onto the band-like base portion 15, and a coupling portion 19 coupling the heart-shaped male portion 17 and the end portion 18.

The female strip member 13 includes a band-like base portion 15 to be fused onto the bag body 14, and a snapping portion 21 having the snapping function.

The snapping portion 21 is composed of a fusing portion 22 fused onto the band-like base portion 15, an arc-like first hook portion 23 formed on the end portion 22, and an arc-like second hook portion 24 formed on the end portion 22 to mutually face the first hook portion 23.

The male strip member 12 and the snapping portion of the female strip member 13 are made of synthetic resin having MI 1-20g/10min.

The band-like base portions 15 are laminate films having a three-layer structure, which includes a first layer 25 fused onto the bag body 14, a second layer 26 laminated on the first layer 25, and a third layer 27 laminated on the second layer 26. The male and female strip members are fused to layer 27.

The first layer 25 is composed of a resin film capable of fusing onto the inner-most layer (sealant) 28 of the bag body 14, the second layer 26 is composed of a biaxially oriented film, for example, a biaxially oriented nylon film, and the third layer 27 is composed of a resin film capable of fusing to the snapping portions 16 and 21 of the respective male and female strip members.

The band-like base portion 15 having the aforementioned three-layer structure is produced by dry-laminating the three films with adhesives or by extrusion coating the first layer 25 and the third layer 27, onto the second film 26.

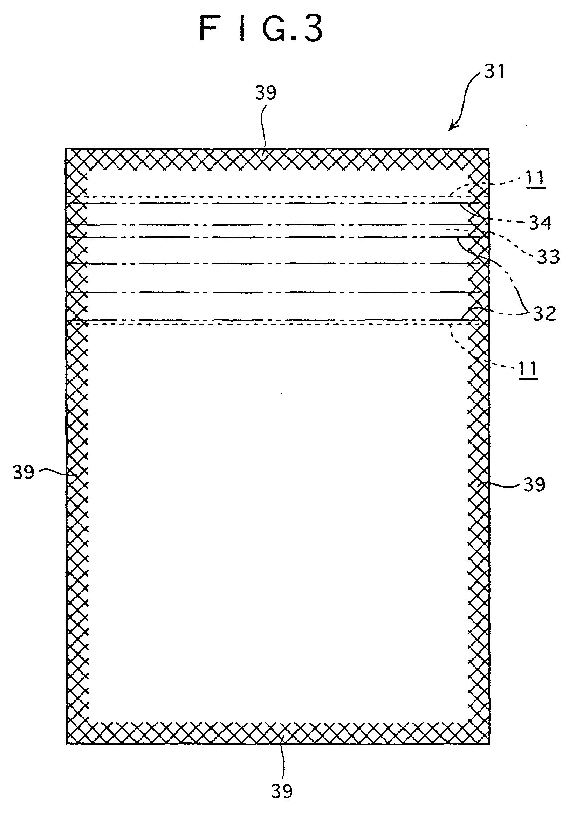

As shown in Fig. 3, a packaging bag 31 with the snap fastener 11 of the embodiment has the snap fastener 11 fused onto the bag body 14 through the first layer 25 of the band-like base portion 15.

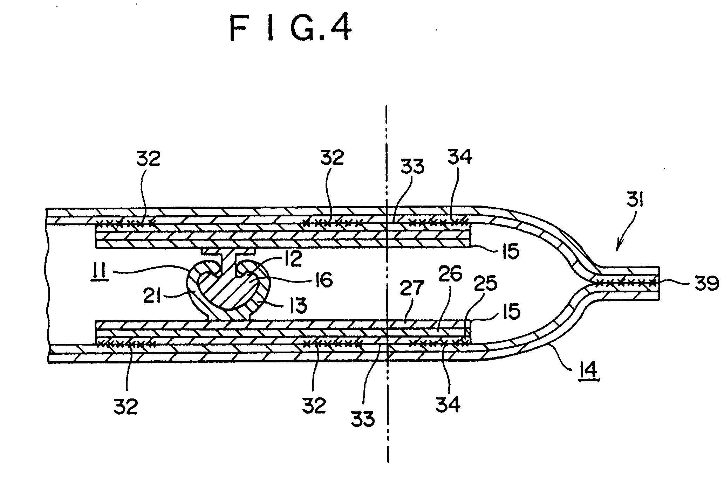

As shown in Fig. 4, a fused portion of the snap fastener 11 and the bag body 14 have first fusing portions 32, formed adjacent to the snapping portions 16 and 21, and second fusing portions 34, formed in the opening side of the bag body 14 to define a non-fusing portion 33 between the two.

The aforementioned first and second fusing portions 32 and 34 can be formed as in the following.

As shown in Fig. 2, in producing the bag, seal bars 35, which include first and second projections 36A and 36B, in order to form the first fusing portions 32, and a third projection 37, in order to form the second fusing portions 34, are arranged on the upper side and the lower side of the bag body 14 to fuse the snap fastener 11 and the bag body 14. At this time in the fusing process, between the male strip member 12 and the female strip member 13, a spacer plate 38 is arranged to prevent the male strip member 12 and the band-like base portion 15 of the female strip member 13 from fusing together.

### EXPERIMENT 1

In the aforementioned embodiment, the film of the first layer 25 and the third layer 27 of the band-like base portion 15 is a double layered coextrusion film (40µm thick, trademark: UniLux LS-711C by Idemitsu Petrochemical Co., Ltd.) of linear low density polyethylene (L-LDPE). The biaxially oriented film for the second layer 26, is a biaxially oriented nylon film (15µm thick, trademark: UniAslon TB-1010 by Idemitsu Petrochemical Co., Ltd.). The biaxially oriented nylon film consists of 70% by weight of Ny 6 and 30% by weight of MXD 6, in which the stretch ratio is 3.0 in both the MD and the TD directions.

The band-like base portion 15 of the experiment is made by dry-laminating the three pieces of film, which form the aforementioned first layer 25 to the third layer 27, and then slitting the laminated film at a width of 20 mm.

The material for the snapping portions 16 and 21 is L-LDPE (MI:6g/10min, trademark: MoreTeck by Idemitsu Petrochemical Co., Ltd.), and the snapping portions 16 and 21 are formed by extruding them onto the band-like base portion 15 to obtain the male strip member 12 and the female strip member 13.

The male strip member 12 and the female strip member 13 of the snap fastener 11 are fused on the bag body 14, which is composed of a biaxially oriented nylon film (having a thickness of 15 µm, a trademark: UniAslon TB-1010) as an outer base material 29 and a coextrusion film (having a thickness of 40 µm, a trademark: UniLux LS-711C) of a linear chain low-density polyethylene (L-LDPE) as a sealant 28, so as to produce the packaging bag 31 with the snap fastener 11 of the experiment (see Fig. 2). The size of the packaging bag 31 is A4, in which seal portions 39 are formed around the edge.

The snap fastener 11 is fused on the bag body 14 at a temperature of 140°C (413K), a pressure of 1 Kg/cm² (0.1 MPa), and at a rate of 40 piece/min. The width of the non-fused portion 33 is 2 mm.

The conditions, when the snap fastener 11 corresponding to a position of the end portion of the bag 31 is forcibly pressed, are a temperature of 190°C (463K), a pressure of 2 kg/cm² (0.2 MPa), and a rate of 30 piece/min.

### EXPERIMENT 2

The packaging bag 31 with the snap fastener 11 is made in the same way as Experiment 1 except that the bag body 14 has the following structure.

The bag body 14 of the experiment is composed of a laminate film for a moisture cloth agent having a four-layer laminated structure consisting of, in order, paper (60µm thick) as the outer base material, LDPE film (15µm thick), aluminum foil (9µm thick), and LDPE film (30µm thick) acting as the sealant.

### COMPARISON 1

The bag in Comparison 1 is made by fusing the same bag body as Experiment 1 with the snap fastener having a band-like base portion with a single layer structure, which is composed of conventional L-LDPE (MI:6 g/10min).

### COMPARISON 2

The bag in Comparison 2 is made by fusing the same bag body as Experiment 2 with the snap fastener having the band-like base portion with a single layer structure, which is composed of conventional LDPE (MI:4 g/10min).

### EVALUATION OF PROPERTIES

The bags in the Experiments and Comparisons are each tested with a linear cut operation, creases produced on the fusing portions between band-like base portion and the bag body, and the degree of damage to the aluminum foil within the bag body. The tested results are shown in Table 1 below.

The evaluation of the "linear cut operation" is carried out by measuring the amount of deviation between the opening formed on the back side and the front side of the film when the bag is opened with hands along the two-dotted line of Fig. 4 formed by incisions on the bag. In the ten tested bags of each Experiment and Comparison, the case of all bags having the result of less than 5 mm is defined as 0, and the case of more than five bags having the result exceeding 5 mm is defined as X. In the Experiment, the incisions are formed on the aforementioned non-fusing portion 33.

The evaluation of creases produced on the fusing portion of the band-like base portion and the bag body is carried out by visually verifying whether creases are produced on and around the fusing portion or not. The case whereby the creases cannot be seen with the naked eye is denoted by 0, and the existence of clearly recognizable creases is denoted by X.

The evaluation of the degree of damage to the aforementioned aluminum foil is carried out by verifying whether damage, such as a fracture in the aluminum foil composing the bag body, is produced or not. The number of damaged samples within 50 test samples was counted.

**TABLE 1**

| | EX.1 | Ex.2 | COM.1 | COM.2 |
|---|---|---|---|---|
| Linear cut operation | O | - | X | - |
| creases on the fusing portion | O | - | X | - |
| The number of damaged aluminum foil | - | 6/50 | - | 43/50 |
| EX.: Experiment | | | | |
| COM.: Comparison | | | | |

From Table 1, as known in Experiment 1, in the packaging bag 31 with the snap fastener lb according to the preferred embodiment, in addition to arranging the biaxially oriented nylon film, having a desirable linear cut operation, as the second layer 26 of each band-like base portion 15 of the male strip member 12 and the female strip member 13, it is provided with the non-fusing portion 33, as a tearing guide, between the first fusing portion 32 and the second fusing portion 34, therefore, it is understood that the accurate desirable line cut performance is obtained. And further, the arrangement of the biaxially oriented nylon film in the base material film of the bag body 14 causes the linear cut operation in opening the bag to be improved.

As indicated in Experiment 1, the band-like base portion 15 of the snap fastener 11 has a three-layer structure of L-LDPE film for the first layer 25 and the third layer 27 and a biaxially oriented nylon film for the second layer 26, therefore, when the snap fastener 11 is fused through the band-like base portion 15 onto the bag body 14, the occurence of creases on the fusing portion between the band-like base portion and the bag body is prevented.

Furthermore, as indicated in Experiment 2, the snapping portions 16 and 21 of the snap fastener 11 according to the embodiment consists of L-LDPE of MI:6 g/10min., and the band-like base portion 15 of the snap fastener 11 has the aforementioned three-layer structure. Therefore, when the snap fastener corresponding to the position of the end of the bag 31 is forcibly pressed, as well as when the snapping portions 16 and 21 are easily pressed, the force generated and applied to the bag body 14 is absorbed by the biaxially oriented nylon film of the second layer 26, with the result that damage to the aluminum foil is reduced.

On the other hand, the conventional bag relating to Comparison 1, consists of L-LDPE of MI:6 g/10min., in which the band-like base portion of the snap fastener is a single layer structure, therefore, the fine linear cut operation can not be obtained, and further, creases appear owing to shrinkage caused by heat when the snap fastener is fused through the band-like base portion onto the bag body.

The snapping portion of the conventional snap fastener according to Comparison 2 consists of LDPE of MI:4 g/10min., and the band-like base portion of the snap fastener is a single layer structure, so that the snapping portion is not easily pressed when the snap fastener corresponding to the position of the end of the bag is forcibly pressed, with the result that the snapping portion causes aluminum foil in the bag body to be damaged.

## Claims

1. A snap fastener (11), having a male strip member (12) and a female strip member (13) which are mutually engaged and each has a band-like base portion (15) and a snapping portion (16,21) having a snapping function, is **characterized in that** the band-like base portion (15) comprises:
a first layer (25) fused onto a bag body (14);
a second layer (26) to be laminated onto said first layer; and
a third layer (27) laminated onto said second layer, said first layer consisting of a resin film heat sealable to the inner-most layer (28) of the bag body (14), said second layer consisting of a biaxially oriented film, said third layer consisting of a resin film fused to the snapping portion, and the snapping portion consisting of synthetic resin having a MI of 1-20 g/10min.

2. The snap fastener according to Claim 1, wherein the biaxially oriented film of said second layer is a biaxially oriented nylon film having more than one layer.

3. The snap fastener according to Claim 2, wherein at least one layer of the biaxially oriented nylon film consists of 40-85% by weight of nylon 6 (Ny 6) and 15-60% by weight of meta-xylylene adipamide (MXD 6), in which the stretch ratio in both the MD (the moving direction of the film) and the TD (the transverse direction of the film) directions are more than 2.8.

4. A bag (31) for packaging with a snap fastener, in which the bag has fused thereon a snap fastener (11) having a male strip member (12) and a female strip member (13), mutually engaged and respectively having a band-like base portion (15) and a snapping portion (16,21) having a snapping function, the band-like base portion (15) comprising:
a first layer (25) to be fused onto a bag body (14) ;
a second layer (26)to be laminated onto said first layer; and
a third layer (27) to be laminated onto said second layer, said first layer consisting of a resin film heat sealable to the innermost layer of the bag body, said second layer consisting of a biaxially oriented film, said third layer consisting of a resin film fused to the snapping portion, and the snapping portion consisting of synthetic resin having a MI of 1-20 g/10min and being fused through said first layer onto the bag body.

5. The bag according to Claim 4, further comprising:
a first fusing portion (32) formed adjacent to the snapping portion between the snapping portion and the bag body; and
a second fusing portion (34) which is also formed between the snapping portion and the bag body, so as to define a non-fusing portion (33), as a tearing guide, between the first fusing portion and the second fusing portion.

## Patentansprüche

1. Ein Schnappverschluß (11) mit einem aufgenommenen Streifenglied (12) und einem aufnehmenden Streifenglied (13), die wechselseitig ineinandergreifen und jeweils ein bandförmiges Basisteil (15) sowie ein Einschnappteil (16, 21) mit einer Einschnappfunktion aufweisen, **dadurch gekennzeichnet, daß** das bandförmige Basisteil (15) umfaßt:
Eine erste Schicht (25), die auf den Beutelkörper (14) aufgeschweißt ist;
eine zweite Schicht (26), die auf die erste Schicht laminiert ist; und
eine dritte Schicht (27), die auf die zweite Schicht laminiert ist, wobei die erste Schicht aus einer Harzfolie besteht, die wärmeverchweißbar mit der innersten Schicht (28) des Beutelkörpers (14) ist, wobei die zweite Schicht aus einer biaxial ausgerichteten Folie besteht, die dritte Schicht aus einer Harzschicht besteht, die auf dem Einschnappteil aufgeschweißt ist, und der Einschnappteil aus Kunstharz mit einem MI von 1-20 g/10min besteht.

2. Der Schnappverschluß gemäß Anspruch 1, in dem die biaxial ausgerichtete Folie der zweiten Schicht eine biaxial ausgerichtet Nylonfolie mit mehr als einer Schicht besteht.

3. Der Schnappverschluß gemäß Anspruch 2, in dem mindestens eine Schicht der biaxial ausgerichteten Nylonfolie zu 40-85 Gew.% aus Nylon 6 (Ny 6), und zu 15-60 Gew.% aus Metaxylylenadipamid (MXD 6) besteht, in dem das Reckverhältnis in beiden Richtungen, sowohl in der MD (Bewegungsrichtung der Folie) als auch der TD (Querrichtung der Folie), über 2,8 beträgt.

4. Ein Verpackungsbeutel (31) mit einem Schnappverschluß, in dem der Beutel einen angeschweißten Schnappverschluß (11) mit einem aufgenommenen Streifenglied (12) und einem aufnehmenden Streifenglied (13) aufweist, die ineinandergreifen und entsprechend einen bandförmigen Grundteil (15) und einen Schnappteil (16, 21) mit der Schnappfunktion aufweisen, wobei der Bandteil (15) umfaßt:
Eine erste Schicht (25), zum Anschweißen an einen Beutelkörper (14);
eine zweite Schicht (26), die auf die erste Schicht laminiert werden muß; und
eine dritte Schicht (27), die auf die zweite Schicht laminiert werden muß, wobei die erste Schicht aus einer Harzfolie besteht, die wärmeverchweißbar mit der innersten Schicht (28) des Beutelkörpers ist, wobei die zweite Schicht aus einer biaxial ausgerichteten Folie besteht, die dritte Schicht aus einer Harzschicht besteht, die auf dem Einschnappteil aufgeschweißt ist, und der Einschnappteil aus Kunstharz mit einem MI von 1-20 g/10min besteht und über die erste Schicht auf den Beutelkörper aufgeschweißt wird.

5. Ein Beutel gemäß Anspruch 4, der ferner umfaßt:
Einen ersten Verschweißteil (32), der anliegend an den Schnappteil zwischen dem Schnappteil und dem Beutelkörper ausgebildet ist; und
einen zweiten Verschweißteil (34), der ebenfalls zwischen dem Schnappteil und dem Beutelkörper ausgebildet ist, so daß er einen Nichtverschweißteil (33) als eine Sollreißführung zwischen dem ersten Verschweißteil und dem zweiten Verschweißteil aufweist.

## Revendications

1. Fermoir à pression (11) comportant un élément de bande mâle (12) et un élément de bande femelle (13) qui sont mutuellement mis en prise et comportent chacun une partie de base en forme de bande (15) et une partie de fermeture par pression (16,21) ayant une fonction de fermeture par pression, **caractérisé par le fait que** la partie de base en forme de bande (15) comprend
une première couche (25) fondue-sur un corps de sac (14) ;
une seconde couche (26) à stratifier sur ladite première couche ; et
une troisième couche (27) stratifiée sur ladite seconde couche, ladite première couche étant constituée d'un film de résine soudable à chaud à la couche la plus intérieure (28) du corps de sac (14), ladite seconde couche étant constituée d'un film bi-axialement orienté, ladite troisième couche étant constituée d'un film de résine fondu sur la partie de fermeture par pression, et la partie de fermeture par pression étant constituée d'une résine synthétique ayant un IF de 1-20g/20 min.

2. Fermoir à pression selon la revendication 1, dans lequel le film bi-axialement orienté de ladite seconde couche est un film de nylon bi-axialement orienté comportant plus d'une couche.

3. Fermoir à pression selon la revendication 2, dans lequel au moins une couche du film de nylon bi-axialement orienté est constituée de 40-85% en poids de nylon 6 (Ny 6) et 15-60% en poids de méta-xylylène adipamide (MXD 6), dans lesquels les rapports d'étirement, à la fois dans la direction DM (la direction de mouvement du film) et la direction DT (la direction transversale du film) sont supérieurs à 2,8.

4. Sac (31) d'emballage équipé d'un fermoir à pression, dans lequel le sac comporte, fondu sur lui, un fermoir à pression (11) comportant un élément de bande mâle (12) et un élément de bande femelle (13) mutuellement mis en prise et comportant respectivement une partie de base en forme de bande (15) et une partie de fermeture par pression (16-21) assumant une fonction de fermeture par pression, la partie de base en forme de bande (15) comprenant :
une première couche (25) à fondre sur un corps du sac (14) ;
une seconde couche (26) à stratifier sur ladite première couche ; et
une troisième couche (27) à stratifier sur ladite seconde couche, ladite première couche
étant constituée d'un film de résine soudable à chaud à la couche la plus intérieure du corps du sac, ladite seconde couche étant constituée d'un film bi-axialement orienté, ladite troisième couche étant constituée d'un film de résine fondu sur la partie de fermeture par pression et la partie de fermeture par pression étant constituée d'une résine synthétique ayant un IF de 1-20 g/10 min et étant fondue par l'intermédiaire de ladite première couche sur le corps du sac.

5. Sac selon la revendication 4, comprenant en outre :
une première partie de fusion (32) formée en position adjacente à la partie de fermeture par pression entre la partie de fermeture par pression et le corps du sac ; et
une seconde partie de fusion (34) qui est également formée entre la partie de fermeture par pression et le corps du sac, de manière à définir une partie de non-fusion (33), en tant que guide de déchirement entre la première partie de fusion et la seconde partie de fusion.
